(19) **Europäisches Patentamt**
**European Patent Office**
**Office européen des brevets**

(11) Veröffentlichungsnummer: **0 222 691 B1**

(12) # EUROPÄISCHE PATENTSCHRIFT

(45) Veröffentlichungstag der Patentschrift:
24.07.91 Patentblatt 91/30

(51) Int. Cl.$^5$: **G02B 6/44**

(21) Anmeldenummer: **86730176.4**

(22) Anmeldetag: **25.10.86**

(54) **Vorrichtung zur Aufbewahrung der Fasern von Glasfaserkabeln in Verteilereinrichtungen im Fernmeldenetz.**

(30) Priorität: 12.11.85 DE 3540472
12.11.85 DE 3540473

(43) Veröffentlichungstag der Anmeldung:
20.05.87 Patentblatt 87/21

(45) Bekanntmachung des Hinweises auf die
Patenterteilung:
24.07.91 Patentblatt 91/30

(84) Benannte Vertragsstaaten:
AT BE CH DE ES FR GB GR IT LI LU NL SE

(56) Entgegenhaltungen:
EP-A- 0 101 970
EP-A- 0 146 478
FR-A- 2 559 916

(73) Patentinhaber: **KRONE Aktiengesellschaft**
**Beeskowdamm 3-11**
**W-1000 Berlin 37 (DE)**

(72) Erfinder: **Sander, Claus**
**Fechnerstrasse 14**
**W-1000 Berlin 31 (DE)**
Erfinder: **Roeseler, Volker**
**Bochumer Strasse 25**
**W-1000 Berlin 21 (DE)**
Erfinder: **Buttke, Klaus-Wilhelm**
**Stadtillmer Weg 26a**
**W-1000 Berlin 48 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zur Aufbewahrung der Fasern von Glasfaserkabeln in Verteilereinrichtungen im Fernmeldenetz gemäß dem Oberbegriff des Anspruches 1.

Es ist bekannt, Glasfasern von Glasfaserkabeln als Spleißreserve auf Spleißkassetten aufzunehmen. Die Spleißreserve ist erforderlich, da die Spleißstelle selbst nicht wieder verwendbar ist und bei jedem Wiederholen des Spleißvorganges ca. 30 mm der Glasfaserlänge verlorengeht. Die in einer Spleißkassette aufgenommene Spleißreserve hat ein Länge von etwa 1 m. Die Spleißkassette muß zum Spleißen einem Spleißtisch zugeführt werden. Hierzu ist es bekannt, zwischen einer festen Abfangung des Glasfaserkabels und der beweglichen, mit der Spleißreserve versehenen Spleißkassette ein internes Verteilerkabel zur Überbrückung des Abstandes zwischen der Kabelabfangung und dem Platz für die Anordnung der Spleißkassette und ein bewegliches zuführungskabel als Teillängen des Glasfaserkabels vorzusehen, welches eine Glasfaserkabellänge von 1 bis 2 m, insbesondere 1,5 m, erfordert. Das bewegliche Zuführungskabel dient zur Überbrückung des Abstandes zwischen dem Platz für die Anordnung der Spleißkassette und einem Spleißtisch, auf welchen die Spleißkassette zum Spleißen verbracht wird. Das bewegliche Zuführungskabel hängt in herkömmlichen Verteilereinrichtungen des Fernmeldenetzes locker herum oder ist um beliebige Bauelemente der Verteilereinrichtung herumgelegt.

Hierbei besteht die Gefahr der Beschädigung, insbesondere des Bruches der Glasfasern des Glasfaserkabels, da die Glasfasern nicht geknickt werden dürfen. Für die Anordnung der Spleißkassette in der Verteilereinrichtung ist noch keine praktikable Lösung vorbekannt, um die Spleißkassette einfach und zweckmäßig aufbewahren zu können.

Es ist aus der EP-A-0.146.478 eine gattungsgemäße Vorrichtung bekannt, bei welcher in einem einseitig offenen Kassettenkasten mehrere Platten herausklappbar gelagert sind, auf welchen die Faservorratslänge und der Spleiß lösbar gelagert sind. Nachteilig hierbei ist, daß die Faservorratslänge und der Spleiß von der jeweils herausgeklappten Platte abgenommen und dem Spleißtisch zugeführt werden müssen. Die Faservorratslänge ist dabei nicht bruchsicher gelagert.

Es ist ferner aus der FR-A-2.559.916 eine gattungsfremde Vorrichtung mit einzelnen Kästen bekannt, die in ähnlicher Weise um eine Achse herausschwenkbar sind. Nachteilig hierbei ist ebenfalls, daß alle Kästen um eine gemeinsame Achse klappbar sind und daß jeder Kasten je eine Faservorratslänge einer optischen Faser aufnimmt. Nachteilig ist ferner, daß die in einem Kasten aufgenommene Faservorratslänge einer optischen Faser nicht von ihrer Lagerungsstelle zum Spleißtisch bewegt werden kann. Jeder Kasten ist nämlich um die Achse festgelagert und dient nur zur Aufnahme einer zum Spleißen aus dem Kasten herauszuziehenden Faservorratslänge. Hierbei besteht eine erhebliche Bruchgefahr für die optische Faser.

Der Erfindung liegt von daher die Aufgabe zugrunde, eine Vorrichtung der gattungsgemäßen Art zu schaffen, welche bei nur geringem Raumbedarf eine einfache Handhabung und insbesondere eine bruchsichere Verbringung der einzelnen Faservorratslängen und deren Spleiße von der Aufbewahrungslage zu einem Spleißtisch und umgekehrt wieder in die Aufbewahrungslage zurück ermöglicht.

Die Lösung dieser Aufgabe ergibt sich aus den kennzeichnenden Merkmalen des Anspruches 1. Erfindungsgemäß werden die einzelnene Kassetten in je einem Kassettenbehälter aufgenommen, der selbst klappbewegbar und mit einer Entnahmeöffnung für die Kassetten versehen ist, welche beim Herunterklappen aus der vertikalen Aufbewahrungslage in die horizontale Entnahmelage frei zugänglich ist. Das Herunterklappen der einzelnen Kassettenkästen erfolgt durch eine erfindungsgemäße Schiebe-Kipp-Lagerung. Nach dem Herunterklappen können die einzelnen Kassetten leicht aus der Entnahmeöffnung des Kassettenkastens entnommen und einem Spleißtisch zugeführt werden, wobei das bewegliche Zuführungskabel als Teillänge des Glasfaserkabels abgewickelt wird. Die Faservorratslänge ist dann am Spleißtisch selbst leicht zugänglich. Beim Verbringen des Kassettenkastens mit innenliegender Kassette aus der Entnahmelage in die Aufbewahrungslage wird die entsprechende Teillänge des Glasfaserkabels von einem vorgegebenen großen Radius auf einen vorgegebenen kleinen Radius gebogen, wobei - bedingt durch die genau definierte Aufbewahrungslage des Kassettenkastens im Gehäuse bzw. im Gestell - der minimal zulässige Biegeradius des Glasfaserkabels nicht unterschritten werden kann. Auf diese Weise werden sowohl die Spleißreserve als auch das bewegliche Zuführungskabel bruchsicher in der Verteilereinrichtung gelagert. In besonders zweckmäßiger Form ist jeder Kassettenkasten zur Aufbewahrung mehrerer, nebeneinanderliegender Kassetten ausgebildet, im Ausführungsbeispiel sind je 5 Kassetten in einem Kassettenkasten vorhanden.

Der erfindungsgemäße Kassettenkasten kann als Einzelstück im Gehäuse eines Kabelendverschlusses oder eines Verteilerkastens aufgenommen werden. Der Gehäuserahmen zur Lagerung des Kassettenkastens kann in weiterer erfindungsgemäßer Ausbildung auch als Gestell für mehrere, übereinander angeordnete Kassettenkästen ausgebildet werden. In beiden Ausführungsformen ist der Kassettenkasten mittels der Schiebe-Kipp-Lagerung im Gehäuserahmen bzw. -gestell gelagert, um eine besonders zweckmäßige vertikale Aufbewahrungslage des Kassettenkastens im Gehäuserahmen bzw. im Gestell und die im wesentlichen horizontale Entnahmelage mit obenliegender Entnahmeöffnung des Kassettenkastens zu ermöglichen, wobei die zulässigen Biegeradien der Glasfaserkabel eingehalten werden. Der Kassettenkasten, der die Kassetten oder Wickelkörper mit aufgewickelten Glasfaserkabeln aufnimmt, ist unter Ausnutzung der zulässigen Biegeradien der Glasfaserkabel derart angeordnet, daß beim Einschieben und Ausklappen des Kassettenkastens größtmögliche Biegeradien für die zugeführten Glasfaserkabel bzw. -bündel zur Verfügung stehen.

Weitere vorteilhafte Ausgestaltungen der Erfindung ergeben sich aus den Unteransprüchen. Hierbei wird insbesondere auf die erfindungsgemäßen Ausführungsformen der als Wickelkörper ausgebildeten Kassette hingewiesen, welche eine besonders bruchsichere Aufbewahrung des beweglichen zuführungskabels und der Spleißreserve bei einfacher Handhabung und bei geringem Raumbedarf ermöglicht.

Die Erfindung ist nachfolgend anhand von zwei Ausführungsformen der Vorrichtung zur Aufbewahrung der Fasern von Glasfaserkabeln in Verteilereinrichtungen im Fernmeldenetz mit Wickelkörpern in Kassettenform näher erläutert.

Es zeigen :

Fig. 1 einen Vertikalschnitt durch einen Kabelendverschluß mit einem Kassettenkasten in Aufbewahrungslage (durchgezogene Linien) und Entnahmelage (strichpunktierte Linien),

Fig. 2 eine Vorderansicht des Kabelendverschlusses bei abgenommenem Verschlußdeckel,

Fig. 3 eine Draufsicht auf den Kassettenkasten gemäß Pfeil III in Fig. 1,

Fig. 4 eine Seitenansicht auf ein mit mehreren übereinander angeordneten Kassettenkästen versehenes Aufteilungsgestell für Glasfaserkabel,

Fig. 5 einen Horizontalschnitt gemäß der Linie V-V in Fig. 4 in größerem Maßstab,

Fig. 6 eine Draufsicht auf einen Wickelkörper in Kassettenform,

Fig. 7 eine Stirnansicht des Wickelkörpers,

Fig. 8 einen Längsschnitt gemäß der Linie VIII-VIII in Fig. 6,

Fig. 9 eine perspektivische Detaildarstellung der mit einem Sperrelement verschließbaren Wickelnut des Wickelkörpers,

Fig. 10 eine Prinzipdarstellung der endständigen Teillängen eines Glasfaserkabels,

Fig. 11 eine teilweise geschnittene Draufsicht auf ein weiteres Ausführungsbeispiel eines Wickelkörpers,

Fig. 12 einen Schnitt gemäß der Linie XII-XII in Fig. 11.

Die Vorrichtung zur Aufbewahrung der Fasern von Glasfaserkabeln in Verteilereinrichtungen im Fernmeldenetz umfaßt einen Kassettenkasten 1 aus Boden 2, zwei Längsseitenwänden 3, 4 und zwei Stirnwänden 5, 6, welche eine Entnahmeöffnung 7 umschliessen.

Der Kassettenkasten 1 ist mittels einer Schiebe-Kipp-Lagerung 8 in einem Gehäuse 9 bzw. in einem Gestell 10 gelagert. Die Schiebe-Kipp-Lagerung 8 ist aus zwei an der Stirnwand 5 des Kassettenkastens 1 nahe der Entnahmeöffnung 7 angeordneten Winkelstücken 11, einer in diesen gelagerten Kippachse 12 und zwei im Gehäuse 9 bzw. Gestell 10 mittels einer Abstandhalterplatte 13' fest angebrachten Führungsschienen 13 gebildet, welche als Schiebelager für die Kippachse 12 dienen und senkrecht zur offenen Seite des Gehäuses 9 bzw. des Gestelles 10 geführt sind und an der offenen Seite enden. Die Führungsschienen 13 weisen je einen Führungsschlitz 14 für die Kippachse 12 auf. Die Führungsschienen 13 sind auf der Abstandhalteplatte 13' befestigt. Diese dient im eingebauten Zustand dazu, eine ausreichende Stabilität der Schiebe-Kipp-Lagerung 8 sicherzustellen und ermöglicht im ausgebauten Zustand des Kassettenkastens 1, daß das Innere des Gehäuses 9 bzw. des Gestells 10 völlig frei zugänglich ist.

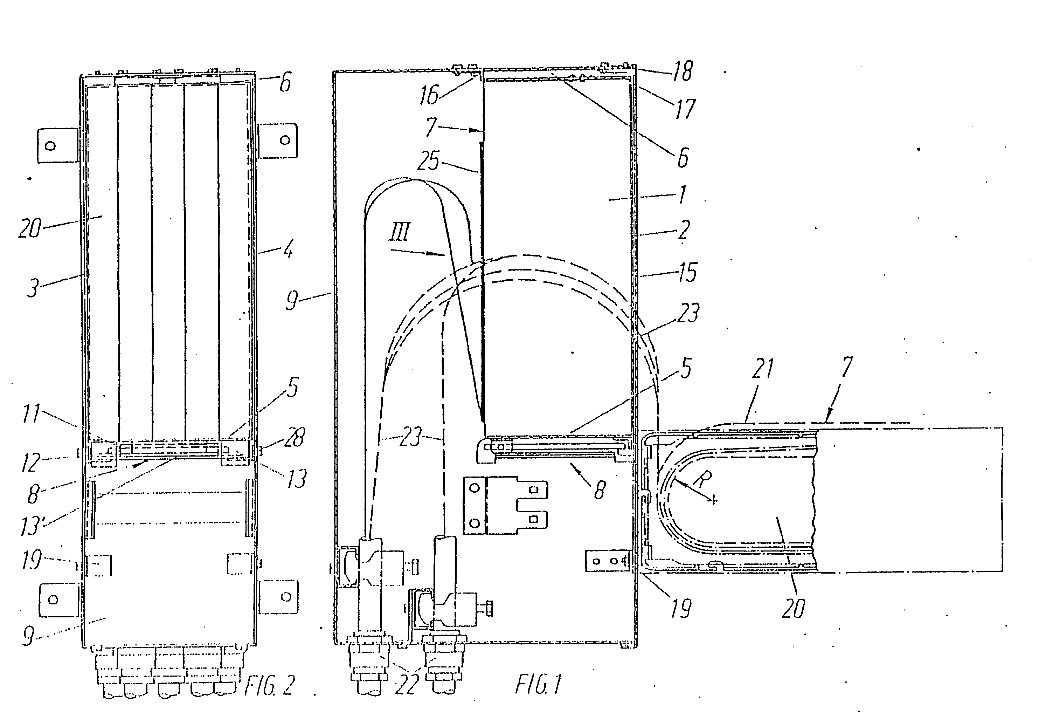

In der ersten Ausführungsform gemäß den Figuren 1 und 2 ist die Verteilereinrichtung ein Kabelendverschluß, welcher aus dem kastenförmigen Gehäuse 9 und einem Verschlußdeckel 15 gebildet ist.

Wie die Figur 1 zeigt, ist im Gehäuse 9 ein einziger Kassettenkasten 1 eingesetzt. Dieser befindet sich innerhalb des Gehäuses 9 in seiner Aufbewahrungslage, in welcher der Kassettenkasten 1 gegen einen Anschlag 16 anliegt, der auf der Innenseite der oberen Wandung des Gehäuses 9 befestigt und durch eine Arretierungsfeder 17 gesichert ist, die hinter einer Raste 18 auf der Innenseite der oberen Wandung des Gehäuses 9 einschnappt.

Der Kassettenkasten 1 kann nach dem Abnehmen des Verschlußdeckels 15 und dem Entriegeln der Arretierungsfeder 17 aus dem Gehäuse 9 herausgezogen werden, wobei die Längswände 3, 4 und die Stirnwände 5, 6 des Kassettenkastens 1 parallel zu den jeweiligen Wandungen des Gehäuses 9 herausgeführt werden. Dabei wird die Achse 12 innerhalb der Führungsschlitze 14 der beiden Führungsschienen 13 geführt. Sobald die Kippachse 12 am vorderen Ende der Führungsschlitze 14 angelangt ist, kann der Kassettenkasten 1 um etwa 90° in seine im wesentlichen horizontale Entnahmelage herausgeschwenkt werden, in welcher die Aufnahmeöffnung 7 nach oben gerichtet ist. Dabei bildet die Kippachse 12 ein Kippgelenk. Die Stirnseite 5 des Kassettenkastens 1 schlägt an Anschläge 19 an, welche an der offenen Seite des Gehäuses 9 jeweils auf den Innenseiten der Seitenwandungen fest angebracht sind.

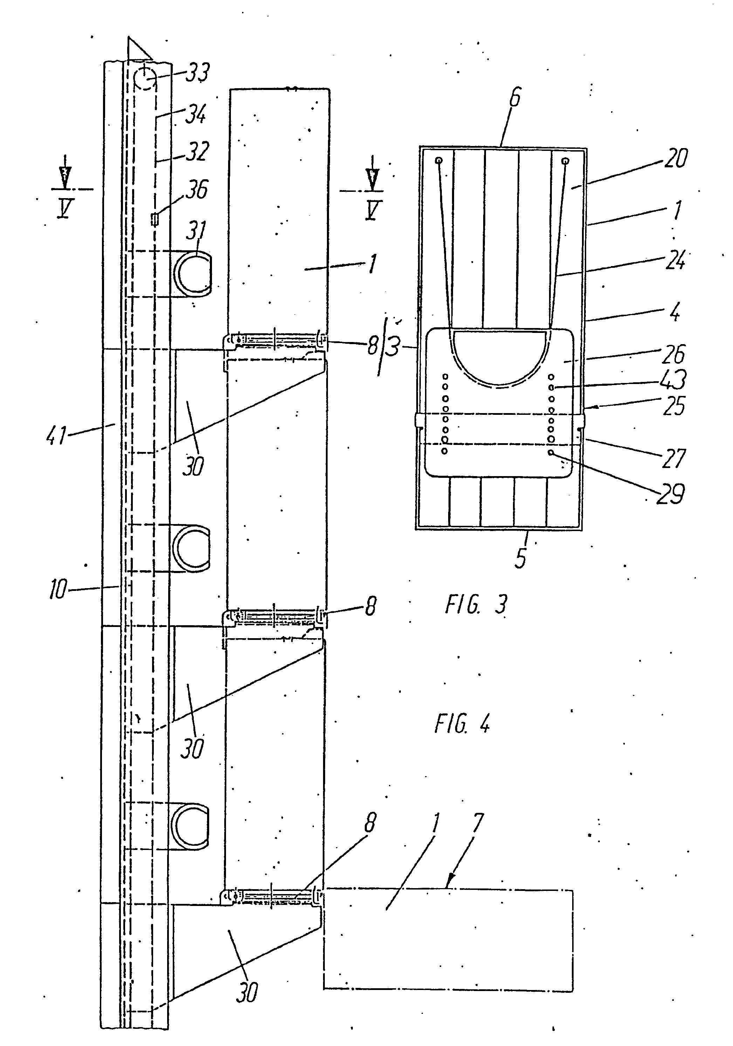

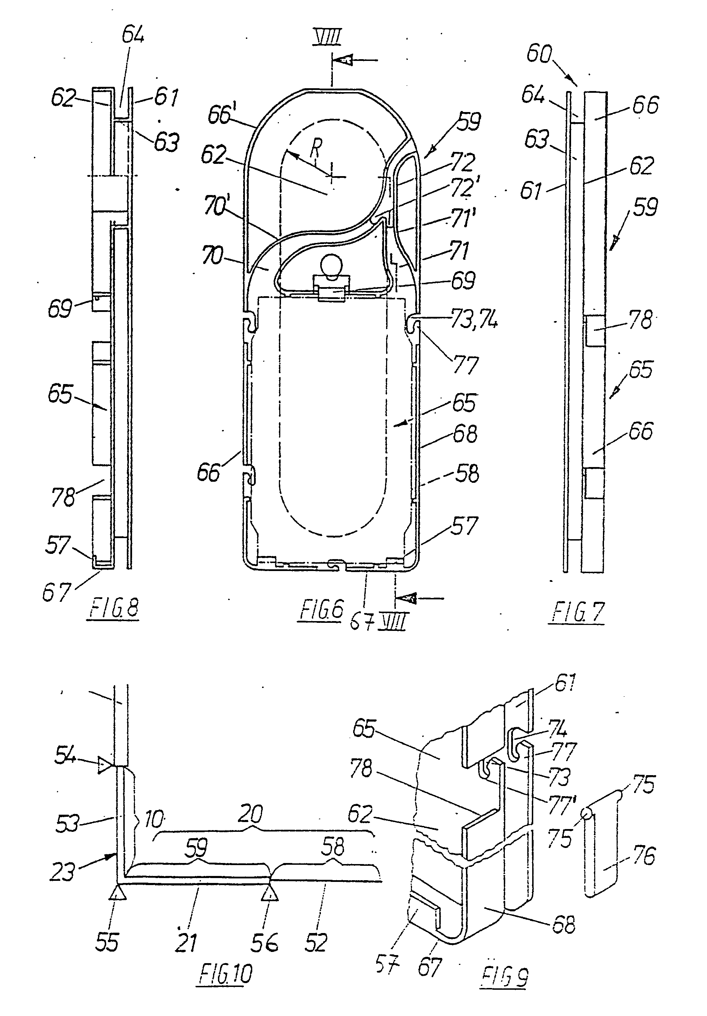

In dem Kassettenkasten 1 sind gemäß Fig. 3 fünf Kassetten 20 für das bewegliche Zuführungskabel des Glasfaserkabels 23 nebeneinander angeordnet, welche jeweils Wickelkörper 59 für das Glasfaserkabel 23 und Spleißkassetten 58 für die Spleißreserve 52 des Glasfaserkabels 23 beinhalten (siehe Fig 6-10). Die über Kabeleinführungen 22 des Gehäuses 9 zugeführten Glasfaserkabel 23 sind in der Entnahmelage des Kassettenkastens 1 bogenförmig den einzelnen, im Kassettenkasten 1 angeordneten, mit Spleißkassetten 58 versehenen Wickelkörpern 59 zugeführt. In der in Fig. 1 ebenfalls dargestellten vertikalen Aufbewahrungslage des Kassettenkastens 1 verlaufen die Glasfaserkabel 23 immer noch, den Wickelradius R des Wickelkörpers 59 ausnutzend, bogenförmig von den Kabeleinführungen 22 zu den Wickelkörpern 59 innerhalb des Kassettenkastens 1. Somit sind die Glasfaserkabel 23 sowohl in der Aufbewahrungslage des Kassettenkastens 1 im Gehäuse 9 als auch in der Entnahmelage des Kassettenkastens 1 unter Ausnutzung des zulässigen Biegeradius bruchsicher aufbewahrt.

Zur Aufnahme von Rangierfasern 24 (siehe Fig. 3) ist auf der Entnahmeöffnung 7 des Kassettenkastens 1 eine Einrichtung 25 zur Befestigung einer Tasche 26 zum knickfreien raumsparenden Verstauen der Rangierfasern 24 innerhalb des Kassettenkastens 1 vorgesehen. Die Einrichtung 25 umfaßt einen die Entnahmeöffnung 7 überspannenden Riegel 27 zur Befestigung der Tasche 26 mittels druckknopfartiger Befestigungselemente 29, welcher sich auf den im Kassettenkasten 1 befindlichen Kassetten 20 abstützt und gleichzeitig das Herausfallen der Kassetten 20 verhindert. Die Tasche 26 nimmt die innerhalb des Kassettenkastens 1 rangierten Rangierfasern 24 auf und ermöglicht den Ausgleich der ungenauen Zuführungslänge der Rangierfasern 24 mittels frei wählbarer Befestigungslöcher 43.

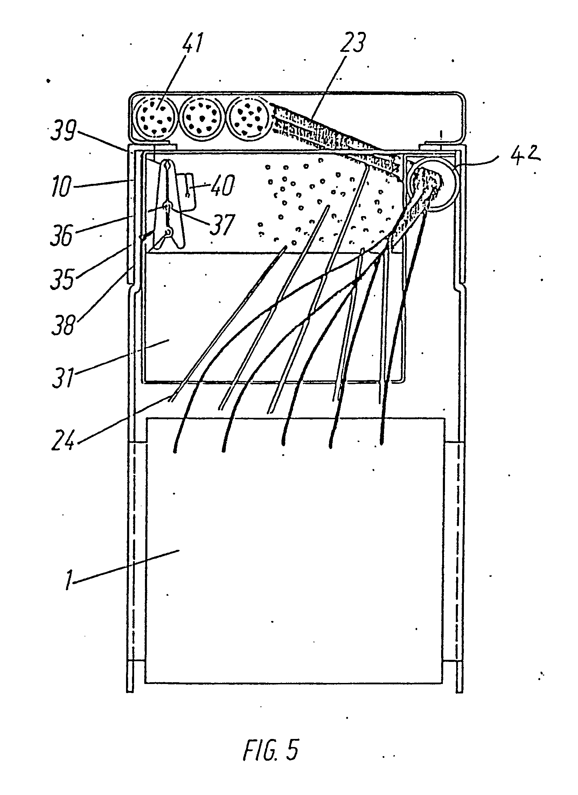

In der in den Figuren 4 und 5 dargestellten zweiten Ausführungsform sind in einem Aufteilungsgestell 10 für Glaserfaserkabel 23 mehrere Kassettenkästen 1 übereinander angeordnet. Jeder Kassettenkasten 1 ist mittels einer Schiebe-Kipp-Lagerung 8, welche analog der in den Figuren 1 und 2 dargestellten ersten Ausführungsform ausgbildet ist, auf je einer Befestigungskonsole 30 gelagert, welche wiederum mit dem Gestell 10 fest verbunden sind.

Auf diese Weise können die Kassettenkästen 1 gemäß der in den Figuren 4 und 5 dargestellten zweiten Ausführungsform in gleicher Weise aus ihrer im wesentlichen vertikalen Aufbewahrungslage in ihre im wesentlichen horizontale Entnahmelage mit obenliegender Entnahmeöffnung 7 bewegt werden, wie es bei der ersten Ausführungsform gemäß Fig. 1 und 2 näher beschrieben worden ist.

Das im horizontalen Querschnitt etwa U-förmige Gestell 10 trägt oberhalb jeder an diesem befestigten Befestigungskonsole 30 etwa halbkreisförmig ausgebildete Leitkörper 31 für Rangierfasern 24, welche die in den einzelnen Kassettenkästen 1 befindlichen, auf den Wickelkörpern 59 der Kassetten 20 aufgewickelten Glasfasern 23 miteinander verbinden. Die Leitkörper 31 sind auf der Innenseite des Gestells 10 zwischen diesem und den in der Aufbewahrungslage befindlichen Kassettenkästen 1 angeordnet. Zum Einziehen der Rangierfasern 24 ist auf der Innenseite des U-förmigen Gestells 10 ein Transportaufzug 32 gelagert, der hinter den in ihrer vertikalen Aufbewahrungslage befindlichen Kassettenkästen 1 sowie hinter den Leitkörpern 31 verläuft. Der Transportaufzug 32 für die Rangierfasern 24 ist aus am oberen und unteren Ende des Gestells 10 gelagerten Umlenkrollen 33 und einem um diesen herumgeführten Transportseil 34 gebildet, mit welchem eine Transportklammer 35 für eine oder mehrere Rangierfasern 24 lösbar verbindbar ist.

Zur Festlegung der Transportklammer 35 am Transportseil 34 ist dieses mit einer aufgequetschen Hülse 36 versehen, auf welche die Transportklammer 35 mit ihrer Klemmstelle 37 aufgeklemmt ist. Parallel hierzu und auf der dem Drehpunkt 38 der Transportklammer 35 abgewandten Seite ist ein Führungskanal 39 für das andere Trum des Transportseiles 34 ausgebildet. Auf einer Seite trägt die Transportklammer 35 eine Klemme 40 zum Einklemmen einer oder mehrerer Rangierfasern 24. Mittels des Transportaufzuges 32 können Rangierfasern 24 in einfacher Weise innerhalb des Gestells 10 von einem Kassettenkasten 1 zum anderen Kassettenkasten 1 verlegt werden, ohne die dazwischenliegenden Kassettenkästen 1 zu öffnen bzw. auszubauen. Die Transportklammer 35 ist frei mit dem Transportseil 34 verbindbar und kann zur Befestigung einer oder mehrerer Rangierfasern 24 aus dem Gestell 10 entnommen werden.

Die Fig. 5 zeigt im horizontalen Querschnitt die Führung mehrerer Glasfaserkabel 23 und Rangierfasern 24. Zur Führung der Glasfaserkabel 23 sind auf der Rückseite des Gestells 10 Führungsrohre 41 unterschiedlicher Länge angebracht, deren Austrittsöffnung 42 jeweils einem Kassettenkasten 1 zugeordnet ist.

Zum leichten Einbringen der Glasfaserkabel 23 in das Gestell 10 ist die Schiebe-Kipp-Lagerung 8 demontierbar sowohl im Gehäuse 9 als auch im Gestell 10 gelagert. Die leichte Demontierbarkeit wird dadurch erzielt, daß der Kassettenkasten 1 mit der Führungsschiene 13 mittels Schraubverbindungen 28 an den Seitenwänden des Gehäuserahmens 9 bzw. an den Befestigungskonsolen 30 leicht lösbar befestigt ist.

Bei der vorangehend beschriebenen Verteilereinrichtung im Fernmeldenetz mit Glasfaserkabeln 23 werden die Glasfasern 52 der auf einer Spleißkassette 58 aufgenommenen Spleißreserve außerhalb der Verteilergehäuse 9 oder -gestelle 10 auf einem nicht dargestellten Spleißtisch gespleißt, wobei die Spleißstelle selbst nicht wiederverwendbar ist, da bei jedem wiederholten Spleiß ca. 30 mm der Glasfaser 52 verlorengeht.

Dies führt dazu, daß in der Verteilereinrichtung bis zur am Ende der Glasfaser 52 gelegenen Spleißstelle zusätzliche Teillängen der Glasfaserkabel 23 beweglich untergebracht werden müssen (Fig. 10). Diese beweglichen Teillängen der Glasfaserkabel 23 sind das interne Verteilerkabel 53, welches zwischen einer Kabelbefestigung 54 am Anfang des Gestelles 10 und einer Kabelbefestigung 55 im Gestell 10 liegt, und ferner das bewegliche Zuführungskabel 21, das zwischen der Kabelbefestigung 55 im Gestell 10 und dem Anfangspunkt 56 der Glasfasern 52 der auf die Spleißkassette 58 aufgewickelten, beweglichen Spleißreserve angeordnet ist.

Die Glasfasern 52 der beweglichen Spleißreserve haben eine Länge von etwa 1 m. Zur Aufnahme des beweglichen Zuführungskabels 21 von etwa 1 bis 2 m Länge, insbesondere 1,5 m, ist der nachstehend beschriebene Wickelkörper 59 vorgesehen, der zusammen mit den auf die Spleißkassette 58 aufgewickelten Glasfasern 52 der beweglichen Spleißreserve nahe der Kabelbefestigung 55 gelagert ist und nur zum Spleißen der Glasfasern 52 der beweglichen Spleißreserve aus dem Kassettenkasten 1 entnommen wird.

Unter Glasfasern 52 werden sowohl einzelne Glasfasern als auch Bündel von Glasfasern verstanden. Das bewegliche Zuführungskabel 21 kann sowohl aus einem einzelnen Glasfaserkabel 23 als auch aus mehreren Glasfaserkabeln 23 gebildet sein. Auch können die Rangierfasern 24 parallel zu den Zuführungskabeln 21 geführt sein.

Der flache und scheibenförmige Wickelkörper 59 umfaßt einen Wickelraum 60, der von zwei Seitenwänden 61, 62 begrenzt wird, welche eine dazwischen befindliche Wickelscheibe 63 von kleineren Flächenabmessungen als die Seitenwände 61, 62 umschließen.

Die Wickelscheibe 63 ist am oberen und unteren Ende des Wickelkörpers 59 unter einem Radius R abgerundet, der größer als 30 mm ist, um ein Knicken der Glasfasern 52 des Zuführungskabels 21 und ggf. der Rangierfasern 24 zu vermeiden. Der zwischen den beiden Seitenwänden 61 und 62 und dem Umfang der Wickelscheibe 63 befindliche Wickelraum 60 bildet eine Wickelnut 64 für das bewegliche Zuführungskabel 21, so daß die Wickelnut 64 zur Aufnahme der notwendigen Länge des Zuführungskabels 21 des Glasfaserkabels 23 und ggf. der Rangierfasern 24 ausreichend dimensioniert werden kann.

Auf der Außenseite der Seitenwand 62 des Wickelkörpers 59 ist eine Aufnahme 65 für die Spleißkassette 58 vorgesehen. Die Aufnahme 65 für die Spleißkassette 58 ist aus auf den Rändern der Seitenwand 62 des Wickelkörpers 59 angeordneten Stegen 66 bis 68 gebildet, deren Höhe über die Seitenwand 62 etwa der Dicke einer Spleißkassette 58 entspricht, deren Standarddicke 8 mm beträgt. Die Spleißkassette 58 wird zwischen die Innenstege 66 bis 68 hinter einen am Steg 67 angebrachten, nach innen ragenden Haken 57 eingelegt und an der dem Steg 67 gegenüberliegenden freien Seite der Aufnahme 65 mittels eines Riegels 69 lösbar in der Aufnahme 65 arretiert, wie es insbesondere Fig. 6 zeigt, in welcher die Spleißkassette 58 mit gestrichelten Linien eingezeichnet ist.

Anstelle der Spleißkassette 58 können auch bei entsprechender Ausbildung der Stege 66 bis 68 die Glasfasern 52 der Spleißreserve unmittelbar in der Aufnahme 65 gelagert werden.

Die über die Aufnahme 65 hinausragende Fläche der Seitenwand 62 des Wickelkörpers 59 ist mit von stegartigen Rändern 70' 71' begrenzten Führungskanälen 70, 71 versehen, welche in einem Führungskanal 72 zusammengeführt sind, der zur Überführung des Zuführungskabels 21 aus der Ebene der Aufnahme 65 in die Ebene des parallel hierzu umlaufenden Wickelraumes 60 dient, welcher durch die Wickelnut 64 zwischen den beiden Seitenwänden 61, 62 gebildet ist.

Der überführende Führungskanal 72 weist in der Ebene der Seitenwand 62 in Richtung der Wickelnut 64 offene Stufen 72' auf, welche einen tangentialen Anschluß der Führungskanäle 70 bis 72 an den Außennumfang der Wickelscheibe 63 bilden, wie es insbesondere aus den Figuren 6 und 8 ersichtlich ist. Der Führungskanal 72 ist bis zum äußeren Umfang der Seitenwand 62 freigeschnitten, um ein seitliches Einführen des Zuführungskabels 21 aus den Führungskanälen 70, 71 auf der Oberseite der Seitenwand 62 und somit aus der Aufnahme 65 in die Wickelnut 64 zu ermöglichen. Der Randbereich der Seitenwand 62 oberhalb der Aufnahme 65 und der Führungskanäle 70, 71 ist noch mit einem umlaufenden Versteifungssteg 66' versehen.

In den Seitenwänden 61, 62 der Wickelnut 64 sind an mehreren Stellen gegenüberliegende Schlitze 73, 74 vorgesehen, welche L-förmig in das Material der Seitenwände 61, 62 eingelassen sind und in welche Rastnoppen 75 von Sperrelementen 76 einrastbar sind, um ein ungewolltes Hinausbewegen des in der Wickelnut 64 aufgewickelten Zuführungskabels 21 aus der Wickelnut 64 zu verhindern.

Die Sperrelemente 76 drücken beim Eindrücken der Rastnoppen 75 in die Schlitze 73, 74 die von diesen freigeschnittenen Wandungsteile 77 der Seitenwände 61, 62 federnd zurück, wodurch die Rastnoppen 75 federnd in den hinter den Wandungsteilen 77 ausgeformten Mulden 77 einrasten. Im Bereich der Schlitze 73 sind die Stege 66, 67, 68 mit Ausschnitten 78 versehen.

Der Wickelkörper 59 ist mit den Seitenwänden 61, 62 der Wickelscheibe 63 und den Stegen 66, 67 und 68 sowie den Begrenzungsstegen 70', 71' der Führungskanäle 70, 71, 72 so ausgelegt, daß dieser z. B. einstückig aus Kunststoff gefertigt werden kann.

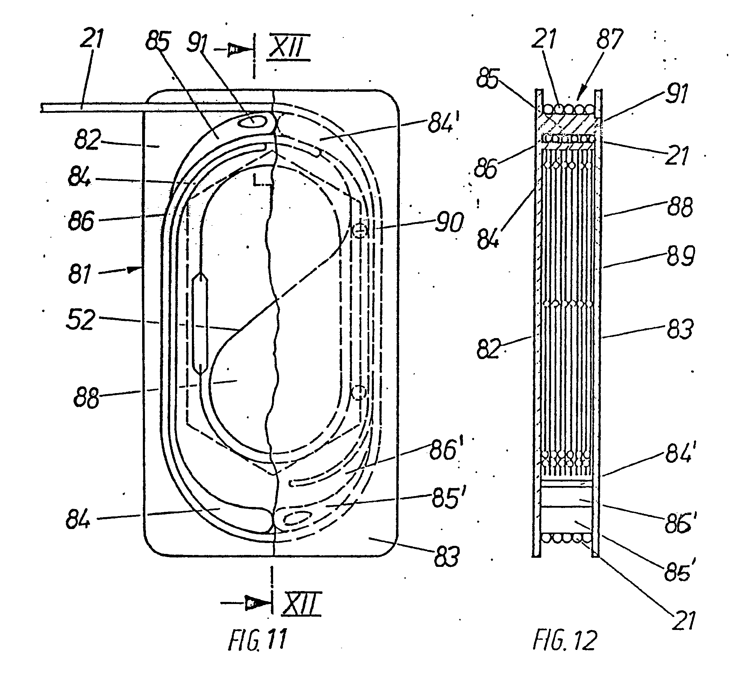

Das in den Figuren 11 und 12 dargestellte weitere Ausführungsbeispiel umfaßt einen Wickelkörper 81 aus zwei parallelen, im wesentlichen rechteckigen Seitenwänden 82, 83, welche den Wickelkörper 81 nach außen begrenzen. Jede Seitenwand 82, 83 weist auf einer Hälfte ihrer Innenseite Führungsstege 84, 85, 84', 85' auf, die einen Führungskanal 86, 86' zwischen sich einschließen. Der Führungssteg 84 entspricht dem halben Umfang eines länglichen Ovals, wobei das in Fig. 11 unten dargestellte Ende des Führungssteges 84 dicker ist als das in Fig. 11 oben dargestellte andere Ende des Führungssteges 84. Diesem dünneren Ende des Führungssteges 84 liegt, getrennt durch den Führungskanal 86, der leitschaufelartig ausgebildete Führungssteg 85 gegenüber. In entsprechender Weise sind die Führungsstege 84' und 85' der anderen Seitenwand 83 ausgebildet, welche Führungsstege 84', 85' den Führungskanal 86' einschließen.

Dieser liegt diametral dem Führungskanal 86 der Seitenwand 82 gegenüber.

Durch sandwichartiges Übereinanderlegen der beiden Seitenwände 82, 83 schließen sich die länglich oval ausgebildeten Führungsstege 84, 85 und 84', 85' zu einer Wickelscheibe mit einer äußeren Wickelnut 87 und mit einem inneren Aufnahmeraum 88. Der innere Aufnahmeraum 88 ist zur Aufnahme einer oder mehrerer beutelartiger Taschen 89 vorgesehen, welche mittels Ringösen 90 zusammengefaßt sind. In den beutelartigen Taschen 89 befinden sich die Glasfasern 52 der beweglichen Spleißreserve eines Glasfaserkabels 23, dessen bewegliches Zuführungskabel 21 in der Wickelnut 87 aufgewickelt ist. Die Überführung des beweglichen Zuführungskabels 21 aus der Wickelnut 87 in die Aufnahme 88 erfolgt durch den Führungskanal 86 der Seitenwand 82.

Bei der Handhabung des Wickelkörpers 81 werden zunächst die beutelartigen Taschen 89 mit den Glasfasern 52 der beweglichen Spleißreserve in den die Aufnahme 88 bildenden Innenraum zwischen den Führungsstegen 84, 85 eingelegt, wobei das bewegliche Zuführungskabel 21 durch den zugehörigen Führungskanal 86 geführt wird. Anschließend wird die andere, spiegelbildlich ausgebildete Seitenwand 83 aufgelegt, so daß nach Vervollständigung der Wickelnut 87 das bewegliche Zuführungskabel 21 in die Wickelnut 87 eingelegt bzw. eingewickelt werden kann.

Jede der beiden Seitenwände 82, 83 mit zugeordneten Führungsstegen 84, 85 bzw. 84', 85' kann einstückig aus Kunststoff hergestellt sein. Zur gegenseitigen Fixierung sind auf den Führungsstegen 85, 85' Rastnocken 91 vorgesehen, welche in entsprechend ausgebildete Rastöffnungen der gegenüberliegenden Seitenwände 82, 83 eingedrückt werden.

## Patentansprüche

1. Vorrichtung zur Aufbewahrung der Fasern von Glasfaserkabeln in Verteilereinrichtungen im Fernmeldenetz, aus einem einseitig offenen Kassettenkasten und aus mehreren, in diesem gelagerten Bauteilen zur Aufnahme jeweils mindestens einer Faservorratslänge und eines Spleißes, dadurch gekennzeichnet,
daß der Kassettenkasten (1) mittels einer Schiebe-Kipp-lagerung (8) in einem Gehäuse (9) bzw. Gestell (10) gelagert und mit einer Entnahmeöffnung (7) für die als Kassetten (20) ausgebildeten Bauteile versehen ist, wobei der Kassettenkasten (1) zwischen einer vertikalen Aufbewahrungslage im Gehäuse (9) bzw. Gestell (10) und einer horizontalen Entnahmelage mit obenliegender Entnahmeöffnung (7) zur Entnahme der Kassetten (20) klappbeweglich gelagert ist, und daß jede Kassette (20) aus einem Wickelkörper (59) mit einem Wickelraum (60) für ein Zuführungskabel (21) und aus einer Aufnahme (65) für den Spleiß und die Glasfasern (52) der Spleißreserve gebildet ist, wobei mindestens eine Führungsnut (70, 71, 72) zur Überführung des Zuführungskabels (21) aus der Aufnahme (65) in den Wickelraum (60) vorgesehen ist.

2. Vorrichtung nach Anspruch 1, dadurch gekennzeichnet,
daß die Schiebe-Kipp-Lagerung (8) aus einer mittels zweier an einer Stirnwand (5) des Kassettenkastens (1) nahe der Entnahmeöffnung (7) angeordneter Wickelstücke (11) gelagerten Kippachse (12) und aus zwei im Gehäuse (9) bzw. Gestell (10) fest angebrachten, mit Führungsschlitzen (14) versehenen Führungsschienen (13) gebildet ist, welche als Schiebelager für die Kippachse (12) dienen und senkrecht zur offenen Seite des Gehäuses (9) bzw. Gestell (10) geführt sind und an dessen offener Seite enden.

3. Vorrichtung nach Anspruch 1 oder 2, dadurch gekennzeichnet,
daß wenigstens ein weiterer Kassettenkasten vorgesehen ist, und daß das als Gestell (10) ausgebildete Gehäuse (9) mit einem parallel zu und hinter den in ihrer vertikalen Aufbewahrungslage befindlichen Kassettenkästen (1) verlaufenden Transportaufzug (32) für Rangierfasern (24) versehen ist, der für die Rangierfasern (24) aus am oberen und unteren Ende des Gestells gelagerten Umlenkrollen (33) und einem um diese herum geführten Transportseil (34) gebildet ist, mit welchem eine Transportklammer (35) für eine oder mehrere Rangierfasern (24) lösbar verbindbar ist.

4. Vorrichtung nach einem der Ansprüche 1 bis 3, dadurch gekennzeichnet,
daß der Wickelraum (60) eine Wickelnut (64) bildet, die in einer zur Ebene der Aufnahme (65) parallelen Ebene angeordnet ist, und daß die Führungsnut (70,71,72) die Ebene der Aufnahme (65) mit der Ebene des Wickelraumes (60) verbindet.

5. Vorrichtung nach Anspruch 4, dadurch gekennzeichnet,
daß die Wickelnut (64) mit einer Wickelscheibe (63) versehen ist, die in der Ebene parallel zur Aufnahme (65) mit einem Radius R ausgebildet ist, der größer als 30 mm ist.

6. Vorrichtung nach einem der Ansprüche 3 bis 5, dadurch gekennzeichnet,
daß die Aufnahme (65) aus auf den Rändern der Seitenwand (62) des Wickelkörpers (59) angeordneten Stegen (66 bis 68) gebildet ist, deren Höhe (H) über der Oberfläche der Seitenwand (62) etwa der Dicke (D) einer Spleißkassette (58) für den Spleiß und die Glasfasern der Spleißreserve entspricht.

7. Vorrichtung nach Anspruch 6, dadurch gekennzeichnet,
daß die Spleißkassette (58) zwischen den Stegen (66, 67, 68) der Aufnahme (65) eingehängt ist.

8. Vorrichtung nach einem der Ansprüche 1 bis 7, dadurch gekennzeichnet,
daß die Länge (L) des Wickelkörpers (59) größer ist als die Länge (1) der Aufnahme (65) und daß auf der die Aufnahme (65) für die Spleißkassette (58) bildenden Seitenwand (62) des Wickelkörpers (59) außerhalb der Aufnahme (65) mindestens ein Überführungskanal (72) für das Zuführungskabel (21) ausgebildet ist.

9. Vorrichtung nach einem der Ansprüche 1 bis 8, dadurch gekennzeichnet,
daß der Wickelkörper (59) aus zwei sandwichartig übereinanderliegenden Seitenwänden (82,83) gebildet ist, die spiegelbildlich mit länglich oval ausgebildeten Führungsstegen (84,85) versehen sind, welche zwischen sich die Führungskanäle (86) für das bewegliche Zufügrungskabel (21) einschließen, und daß innerhalb des von den ovalen Führungsstegen (84,85) eingeschlossenen Aufnahmeraumes (88) beutelartige Taschen (89) für den Spleiß und die Glasfasern (52) der beweglichen Spleißreserve des Glasfaserkabels (21) angeordnet sind.

## Claims

1. A device for the preservation of the fibres of glass fibre cables in the distribution assembly of a telecommunication network, comprising a cassette box open on one side and several components supported therein for receiving at least one spare fibre length and one splice each,
characterized by that the cassette box (1) is supported in a housing (9) or frame structure (10), resp., by means of a slide/tilt bearing (8), and is provided with a removal opening (7) for the components adapted as cassettes (20), the cassette box (1) being supported swingably between a vertical preservation position in the housing (9) or in the frame structure (10), resp., and a horizontal removal position with top removal opening (7) for removing the cassettes (20), and that each cassette (20) is formed of a winding body (59) with a winding space (60) for a lead cable (21) and of a receiving section (65) for the splice and the glass fibres (52) of the splice spare, at least one guide groove (70, 71, 72) being provided for supplying the lead cable (21) from the receiving section (65) into the winding space (60).

2. A device according to claim 1,
characterized by that the slide/tilt bearing (8) is formed of a tilt axle (12) supported by means of two angular pieces (11) disposed at the front wall (5) of the cassette box (1) near to the removal opening (7) and of two guide rails (13) rigidly attached in the housing (9) or frame structure (10), resp., and provided with guide slots (14), said guide rails serving as glide bearings for the tilt axle (12) and being guided vertically to the open side of the housing (9) or frame structure (10), resp., and terminating at the open side thereof.

3. A device according to claim 1 or 2,
characterized by that at least one additional cassette box is provided, and that the housing (9) adapted as a frame structure (10) is provided with a conveyor lift (32) for jumper fibres (24), said conveyor lift being arranged parallely to and behind the cassette boxes (1) being in their preservation position, and said conveyor lift being formed, for the jumper fibres (24), of guide rollers supported at the upper and lower ends of the frame structure and of a conveyor cable guided thereabout, jumper fibres (24) is releasably connectable.

4. A device according to one of claims 1 to 3,
characterized by that the winding space (60) forms a winding groove (64) being disposed in a plane parallel to the plane of the receiving section (65), and that the guide groove (70, 71, 72) connects the plane of the receiving section (65) with the plane of the winding space (60).

5. A device according to claim 4,
characterized by that the winding groove (64) is provided with a winding disk (63) being formed in the plane parallel to the receiving section (65) with a radius larger than 30 mm.

6. A device according to one of claims 3 to 5,
characterized by that the receiving section (65) is formed of crosspieces (66 to 68) arranged on the edges of the side wall (62) of the winding body (59), the height (H) of which beyond the surface of the side wall (62) corresponds approximately to the thickness (D) of a splice cassette (58) for the splice and the glass fibres of the splice spare.

7. A device according to claim 6,
characterized by that the splice cassette (58) is suspended between the crosspieces (66, 67, 68) of the receiving section (65).

8. A device according to one of claims 1 to 7, characterized by that the length (L) of the winding body (59) is larger than the length (1) of the receiving section (65), and that on the side wall (62) forming the receiving section (65) for the splice cassette (58), outside the receiving section (65), at least one transfer channel (72) for the lead cable (21) is provided.

9. A device according to one of claims 1 to 8, characterized by that the winding body (59) is formed of two side walls (82, 83) arranged on top of each other in sandwich-type manner, said side walls being provided symmetrically with oblong, oval guide pieces (84, 85) including the guide channels (86) for the movable lead cable (21), and that within the receiving space (88) formed between the oval guide pieces (84, 85), bag-type pockets (89) are disposed for the splice and the glass fibres (52) of the movable splice spare of the glass fibre cable (21).

## Revendications

1. Dispositif de stockage pour câbles à fibres optiques dans des installations de distribution pour réseau de télécommunication, comprenant une caisse à cassettes ouverte d'un côté et de plusieurs composants logés là-dedans pour recevoir chacun au moins une longueur de stockage de fibre et une épissure, caractérisé en ce que la caisse à cassettes (1) est logée au moyen d'un logement à glissement et à basculement (8) dans un boîtier (9) ou un châssis (10) et est pourvue d'une ouverture de prise (7) pour les composants agencés sous la forme de cassettes (20), la caisse à cassettes (1) étant logée en manière rabattable entre une position de stockage verticale dans le boîtier (9) ou le châssis (10) et une position de prise horizontale avec ouverture de prise (7) supérieure pour enlever les cassettes (20), et que chaque cassette (20) est formée d'un corps bobiné (59) avec un espace pour les bobines (60) pour un câble d'amenage (21) et d'un logement (65) pour l'épissure et les fibres optiques (52) de la réserve d'épissure, au moins une rainure de guidage (70, 71, 72) étant prévue pour convoyer le câble d'amenage (21) du logement (65) dans l'espace pour les bobines (60).

2. Dispositif selon la revendication 1, caractérisé en ce que le logement à glissement et à basculement (8) est formé d'un axe d'inclinaison (12) logé au moyen de deux pièces coudées (11) disposées à la face avant (5) de la caisse à cassettes (1) près de l'ouverture de prise (7), et de deux rails de guidage (13) fixés dans le boîtier (9) ou le châssis (10) et pourvus de fentes de guidage (14), lesdits rails de guidage servant de palier à glissement pour l'axe d'inclinaison (12) et étant guidés verticalement par rapport au côté ouvert du boîtier (9) ou du châssis (10) et se terminant au côté ouvert de celui-ci.

3. Dispositif selon la revendication 1 ou 2, caractérisé en ce qu'au moins une caisse à cassettes additionnelle est prévue, et que le boîtier (9) agencé sous la forme d'un châssis (10) est pourvu d'un ascenseur de transport (32) pour les fibres de connexion (24), ledit ascenseur de transport s'étendant en parallèle à et derrière les caisses à cassettes (1) et étant formé pour les fibres de connexion (24) de poulies de mouflage (33) logées à l'extrémité supérieure et inférieure du châssis et d'un câble de transport (34) guidé autour de celles-ci, auquel une bride de transport (35) pour un ou plusieurs fibres de connexion (24) est reliée détachablement.

4. Dispositif selon une des revendications 1 à 3, caractérisé en ce que l'espace pour les bobines (60) forme une rainure de bobinage (64), qui est disposée en un plan parallèle au plan du logement (65), et que la rainure de guidage (70, 71, 72) relie le plan du logement (65) au plan de l'espace pour les bobines (60).

5. Dispositif selon une des revendications 1 à 3, caractérisé en ce que la rainure de bobinage (64) est pourvue d'un disque de bobinage (63), qui est agencé dans le plan parallèle au logement (65) avec un rayon R étant supérieur à 30 mm.

6. Dispositif selon une des revendications 3 à 5, caractérisé en ce que le logement (65) est formé de traverses (66 à 68) disposées aux bords de la paroi latérale (62) du corps bobiné (59), l'hauteur (H) desquelles sur la surface de la paroi latérale (62) correspond environ à l'épaisseur (D) d'une cassette d'épissure (58) pour l'épissure et les fibres optiques de la réserve d'épissure.

7. Dispositif selon la revendication 6, caractérisé en ce que la cassette d'épissure (58) est suspendue entre les traverses (66, 67, 68) du logement (65).

8. Dispositif selon une des revendications 1 à 7, caractérisé en ce que la longueur (L) du corps bobiné (59) est plus grande que la longueur (l) du logement (65), et qu'à la paroi latérale (62) du corps bobiné (59) formant le logement (65) de la cassette d'épissure (58), au moins un canal de transfert (72) pour le câble d'amenage (21) est agencé hors du logement.

9. Dispositif selon une des revendications 1 à 8, caractérisé en ce que le corps bobiné (59) se compose de deux parois latérales (82, 83) disposées l'une sur l'autre en manière de sandwich, qui sont pourvues symétriquement de traverses de guidage (84, 85) ovales, qui entourent entre eux les canaux de guidage (86) pour le câble d'amenage (21) amovible, et qu'à l'intérieur de l'espace de logement (88) formé par les traverses de guidage (84, 85) ovales, des poches (89) sous la forme de sacs pour l'épissure et les fibres optiques (52) de la réserve d'épissure amovible du câble optique (21) sont disposées.

FIG. 2

FIG. 1

EP 0 222 691 B1

FIG. 3

FIG. 4

FIG. 5

FIG.8

FIG.6

FIG.7

FIG.10

FIG.9

FIG. 11

FIG. 12